# DEMANDE DE BREVET EUROPEEN

(11) **EP 2 362 019 A2**
(43) Date de publication de la demande: **31.08.2011**
(21) Numéro de dépôt: 11305181.7
(22) Date de dépôt: 22.02.2011
(51) Int. Cl.: E01C 19/10, B01F 15/02, B65G 47/44

(54) **Dispositif d'introduction de matériaux dans un tambour rotatif d'une centrale d'enrobage pour la préparation de produits enrobés bitumineux**

(30) Priorité: 22.02.2010 FR 1051256
(71) Demandeur: Famaro, 42420 Lorette (FR)
(72) Inventeur: Marconnet, Guy André, 42800, Saint Martin la Plaine (FR); Riche, Hervé, 69540, Irigny (FR); Audoux, Thomas, 69007, Lyon (FR)
(74) Mandataire: Blot, Philippe Robert Emile

(57) **Abrégé**

Le tambour (10) de la centrale d'enrobage comporte une enveloppe (11) montée rotative et munie d'une entrée (12) des matériaux au niveau de laquelle débouche un convoyeur élévateur-enfourneur (20) des matériaux à l'intérieur de l'enveloppe (11). Le convoyeur (20) comporte à son extrémité située au niveau de l'entrée (12) du tambour (10), deux déviateurs (25, 30) opposés, disposés de part et d'autre dudit convoyeur (20) et déplaçables par pivotement entre une première position écartée l'un de l'autre pour lancer les matériaux à l'intérieur de ladite enveloppe (11) et une seconde position dans le prolongement l'un de l'autre en regard de l'extrémité du convoyeur (20) pour dévier les matériaux vers un ensemble de récupération en dehors du tambour (10).

## Description

La présente invention concerne un dispositif d'introduction de matériaux dans un tambour rotatif d'une centrale d'enrobage pour la préparation de produits enrobés bitumineux.

De manière classique, la fabrication de produits enrobés bitumineux, notamment pour des revêtements routiers, est réalisée dans une centrale d'enrobage à partir de matériaux composés de granulats froids et humides qui sont mélangés, d'une part, avec des liants bitumineux ou des liants de synthèse ou d'origine végétale et, d'autre part, avec des matières pulvérulentes. Cette fabrication est très souvent réalisée à chaud, les granulats de départ froids et humides étant tout d'abord séchés et chauffés avant d'être additionnés de liants, puis malaxés avec le liant liquide qui assure l'enrobage des granulats. Des matières pulvérulentes ou fillers sont ajoutés au mélange, dans la phase de malaxage, afin d'ajuster la teneur en matière à fine granulométrie des enrobés produits. Dans le cas de produits bitumineux, le liant est constitué par du bitume liquide.

Dans certains cas une proportion plus ou moins importante de produits bitumineux recyclés obtenus par exemple par concassage de revêtements routiers usés dont on effectue le remplacement, est ajoutée aux granulats.

La technique la plus récente consiste à réaliser les opérations de séchage, de chauffage et de malaxage dans une même centrale d'enrobage généralement constituée par un tambour sécheur suivi d'un malaxeur continu ou discontinu ou par un tambour sécheur-malaxeur. Dans tous les cas, le tambour comporte une enveloppe de forme générale cylindrique montée rotative autour de son axe longitudinal faiblement incliné par rapport au plan horizontal.

Les granulats froids et humides sont chauffés et séchés dans l'enveloppe du tambour qui comporte à une extrémité, un brûleur pour la circulation dans ladite enveloppe de gaz chauds. L'extrémité d'introduction des granulats est située, soit à l'opposé du brûleur pour une circulation à contre-courant de ces granulats par rapport aux gaz chauds, soit au niveau de la même extrémité que les brûleurs pour une circulation desdits granulats dans le même sens que les gaz chauds.

Dans le cas d'un tambour sécheur avec une circulation à contre-courant, l'enveloppe du tambour détermine de l'extrémité d'entrée jusqu'à l'extrémité de sortie :
- une zone d'introduction des granulats froids et humides,
- une zone de séchage et de chauffage des granulats par les gaz chauds produits par la flamme du brûleur,
- une zone de flamme dans laquelle se développe ladite flamme, et
- une zone de sortie des granulats secs et chauds .

Dans le cas d'un tambour sécheur-malaxeur avec une circulation à contre-courant, l'enveloppe du tambour comporte à la suite de la zone de flamme :
- une zone d'introduction du liant liquide et des pulvérulents et de malaxage avec les granulats chauds et secs, et
- une zone d'évacuation des produits enrobés bitumineux.

Les granulats froids et humides sont emmagasinés dans une unité de stockage qui se compose de plusieurs trémies dans lesquelles ces granulats sont placés en fonction de leur granulométrie et/ou de leur composition. Ces granulats peuvent être classés depuis les matériaux à fine granulométrie tels que les pulvérulents ou le sable jusqu'à des matériaux à forte granulométrie tels que les cailloux.

Le transfert des granulats depuis l'unité de stockage jusqu'à l'entrée de l'enveloppe du tambour est réalisé au moyen d'un convoyeur constitué le plus souvent par un tapis transporteur à bande sans fin.

L'entrée de l'enveloppe du tambour située à l'opposé du brûleur pour les tambours à contre-courant et par laquelle sont introduits les matériaux, c'est-à-dire les granulats froids et humides, est équipée d'une boîte à fumée reliée à un système de filtration pour retenir notamment les poussières en suspension dans les fumées et les gaz avant le rejet dans l'atmosphère.

Généralement, trois méthodes sont utilisées pour enfourner les matériaux, c'est-à-dire les granulats dans l'enveloppe du tambour sécheur-malaxeur.

Une première méthode consiste à élever ces matériaux au moyen du convoyeur élévateur à un niveau supérieur à la boîte à fumée pour les faire redescendre par gravité dans l'enveloppe du tambour au moyen d'une goulotte inclinée. Cette disposition permet d'installer entre la goulotte et le convoyeur élévateur, un système de by-pass à volets qui permet de dévier les matériaux et les empêchent d'entrer dans l'enveloppe du tambour. Ce système de by-pass permet ainsi de recueillir les matériaux déviés dans une benne par exemple d'un camion ou dans un godet d'un chargeur en vue de vidanger les éléments, de dosage des trémies de l'unité de stockage des matériaux et ainsi de procéder au calibrage de ces éléments de dosage.

Une deuxième méthode consiste à élever les matériaux au moyen d'un convoyeur élévateur à un niveau situé dans la moitié supérieure de la boîte à fumée. Ce convoyeur élévateur alimente alors un tapis transporteur qui généralement pénètre en partie basse de la boîte à fumée et lance les matériaux dans l'enveloppe du tambour lorsque ce tapis est en marche avant. Pour dévier les matériaux vers une benne d'un camion ou vers un godet d'un chargeur en vue de vidanger les éléments de dosage des trémies de l'unité de stockage pour procéder à leur calibrage, le tapis transporteur est entraîné en marche arrière.

Une troisième méthode consiste à placer le convoyeur élévateur en partie basse de la boîte à fumée pour injecter les matériaux dans l'enveloppe du tambour. Mais, pour effectuer une vidange des éléments de dosage des trémies de l'unité de stockage en vue d'effectuer leur calibrage, les matériaux ne peuvent être recueillis qu'à la sortie de l'enveloppe du tambour ce qui augmente le temps de vidange des unités de stockage du fait que les matériaux doivent traverser le tambour sur toute sa longueur.

On connaît dans le document JP 58193828A un dispositif d'orientation de matériaux depuis un tapis d'alimentation entre deux tapis transporteurs. Ce dispositif comprend deux volets déplaçables entre une première position d'orientation des matériaux vers un premier tapis transporteur et une seconde position d'orientation des matériaux vers un second tapis transporteur.

Le dispositif décrit dans ce document ne permet pas de libérer complètement la jetée du tapis d'alimentation car l'un des volets coupe le flux de matériaux.

Or, pour le transfert de matériaux entre un tapis d'alimentation et un tambour rotatif d'une centrale d'enrobage, le flux de matériaux doit être continu et constant et tout risque de fuite de matériaux doit être évité pendant la phase d'enfournement.

L'invention a pour but de proposer un dispositif d'introduction de matériaux dans un tambour rotatif d'une centrale d'enrobage au moyen d'un convoyeur transporteur-enfourneur disposé en partie basse de la boîte à fumée qui assure la fonction de lancer les matériaux dans l'enveloppe du tambour pendant son fonctionnement et de dévier ces matériaux hors de cette enveloppe du tambour pour vider les éléments de dosage des trémies de l'unité de stockage en vue de les étalonner.

L'invention a donc pour objet un dispositif d'introduction de matériaux dans un tambour rotatif d'une centrale d'enrobage pour la production de produits enrobés bitumineux, ledit tambour comportant une enveloppe montée rotative autour de son axe longitudinal et munie d'une entrée des matériaux au niveau de laquelle débouche un convoyeur élévateur-enfourneur de ces matériaux à l'intérieur de l'enveloppe, caractérisé en ce que le convoyeur comporte à son extrémité située au niveau de l'entrée du tambour, deux déviateurs opposés, disposés de part et d'autre dudit convoyeur et déplaçables par pivotement entre une première position écartée l'un de l'autre libérant l'extrémité du convoyeur pour lancer les matériaux à l'intérieur de ladite enveloppe et une seconde position dans le prolongement l'un de l'autre en regard de l'extrémité dudit convoyeur pour dévier les matériaux vers un ensemble de récupération en dehors du tambour.

Selon d'autres caractéristiques :
- les deux déviateurs comprennent un déviateur supérieur formé par une goulotte de section transversale en U, ouverte vers le bas dans la première position et un déviateur inférieur formé par une goulotte de section transversale en U, ouverte vers le haut dans la première position,
- le fond de la goulotte du déviateur supérieur présente longitudinalement une forme sensiblement concave et le fond de la goulotte du déviateur inférieur est plat,
- chacun des déviateurs est monté pivotant sur un axe sensiblement horizontal,
- le convoyeur est formé par un tapis transporteur à bande sans fin comportant un rouleau de tête disposé sensiblement au niveau de l'entrée du tambour et en ce que l'axe de pivotement du déviateur supérieur est situé en avant de l'axe du rouleau de tête par rapport au sens de déplacement du tapis transporteur et l'axe de pivotement du déviateur inférieur est situé au-dessous de l'axe dudit rouleau de tête, et
- les axes de pivotement des déviateurs, respectivement supérieur et inférieur, sont portés par un châssis du convoyeur ou par une boîte à fumée placée au niveau de l'entrée du tambour ou par un châssis indépendant.

L'invention sera mieux comprise à la lecture de la description qui va suivre, donnée à titre d'exemple et faite en référence aux dessins annexés, sur lesquels :
- la figure 1 est une vue schématique en élévation d'un tambour rotatif d'une centrale d'enrobage pour la préparation de produits enrobés bitumineux,
- la figure 2 est une vue schématique de côté d'un dispositif d'introduction des matériaux dans le tambour rotatif, en position d'introduction de ces matériaux,
- la figure 3 est une vue schématique en perspective et de face du dispositif d'introduction des matériaux, et
- la figure 4 est une vue schématique en coupe longitudinale du dispositif d'introduction des matériaux dans le tambour, en position de déviation de ces matériaux.

D'une manière générale, l'invention se rapporte aux centrales d'enrobage comportant soit un tambour sécheur suivi d'un malaxeur, soit un tambour sécheur-malaxeur.

Dans ce qui suit, l'invention sera décrite pour un tambour sécheur-malaxeur destiné à la préparation de produits enrobés bitumineux.

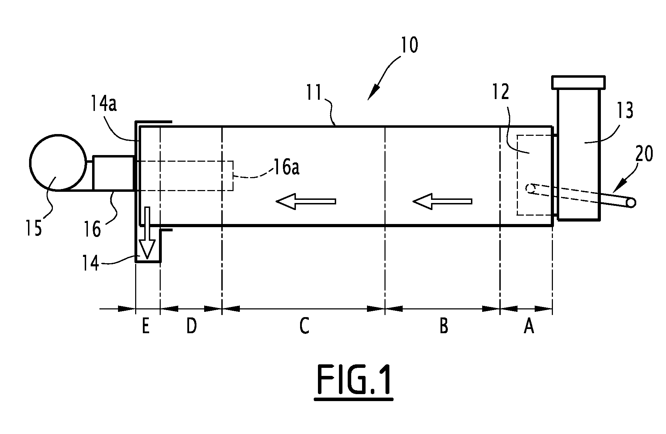

Sur la figure 1, on a représenté schématiquement un tambour et à titre d'exemple sécheur-malaxeur 10 d'une centrale de préparation en continu de produits enrobés bitumineux à partir de granulats froids et humides, de bitume ou de liants hydrocarbonés et éventuellement de produits bitumineux recyclés.

Le tambour sécheur-malaxeur 10 est de type connu et il est destiné tout d'abord à sécher et à chauffer les granulats froids et humides provenant d'une unité de stockage, non représentée, composée de plusieurs trémies dans lesquelles les granulats vierges sont placés en fonction de leur granulométrie et/ou de leur composition.

Ces granulats peuvent être classés depuis les matériaux à fine granulométrie tels que les pulvérulents ou le sable jusqu'à des matériaux à forte granulométrie tels que des cailloux. Chaque trémie de l'unité de stockage est équipée d'un élément de dosage, non représenté.

Le tambour 10 comporte une enveloppe 11 de forme générale cylindrique, montée rotative sur un support, non représenté, autour de son axe qui est légèrement incliné par rapport au plan horizontal.

L'enveloppe 11 montée rotative autour de son axe longitudinal comporte une entrée 12 des matériaux c'est-à-dire des granulats froids et humides, équipée d'une boîte à fumée 13 reliée à un système de filtration, non représenté, pour retenir notamment les poussières en suspension dans les fumées et dans les gaz avant le rejet dans l'atmosphère. L'enveloppe 11 comporte également une sortie 14 des produits enrobés bitumineux fabriqués à l'intérieur du tambour 10, comme on le verra ultérieurement.

La sortie 14 est située à un niveau inférieur au niveau de l'entrée 12.

Un convoyeur élévateur-enfourneur 20 des matériaux, c'est-à-dire des granulats froids et humides, est disposé à l'entrée 12 de l'enveloppe 11 et ce convoyeur 20 pénètre dans la partie basse de la boîte à fumée 13.

L'enveloppe 11 comporte à l'opposé de la boîte à fumée 13, une paroi d'extrémité 14a pourvue d'un brûleur 15 ayant un corps 16 de forme allongée introduit axialement par cette paroi 14a et le corps 16 du brûleur 15 est fixé de manière coaxiale par rapport à l'enveloppe 11.

De manière classique et comme représentée sur à la figure 1, l'enveloppe 11 du tambour 10 détermine de l'entrée 12 jusqu'à la sortie 14, une succession de zones, à savoir :
- une zone A d'introduction des matériaux constitués par des granulats froids et humides,
- une zone B de séchage et de chauffage des matériaux par les gaz chauds produits par la flamme du brûleur 15,
- une zone C de flamme dans laquelle se développe la flamme,
- une zone D d'introduction des matériaux additionnels constitués par le bitume ou les liants hydrocarbonés et les pulvérulents et de malaxage des matériaux de base et additionnels, et
- une zone E d'évacuation des produits enrobés bitumineux.

Le convoyeur 20 est formé par un tapis transporteur à bande sans fin qui comporte, de manière classique, une bande 21 guidée par des rouleaux de support, non représentée, portés par un châssis 22. Le tapis transporteur du convoyeur 20 comporte un rouleau de tête 23 sur lequel se déplace la bande 21 du tapis transporteur. L'extrémité avant du tapis transporteur munie du rouleau de tête 23 est située sensiblement au niveau de l'entrée 12 de l'enveloppe 11 du tambour 10.

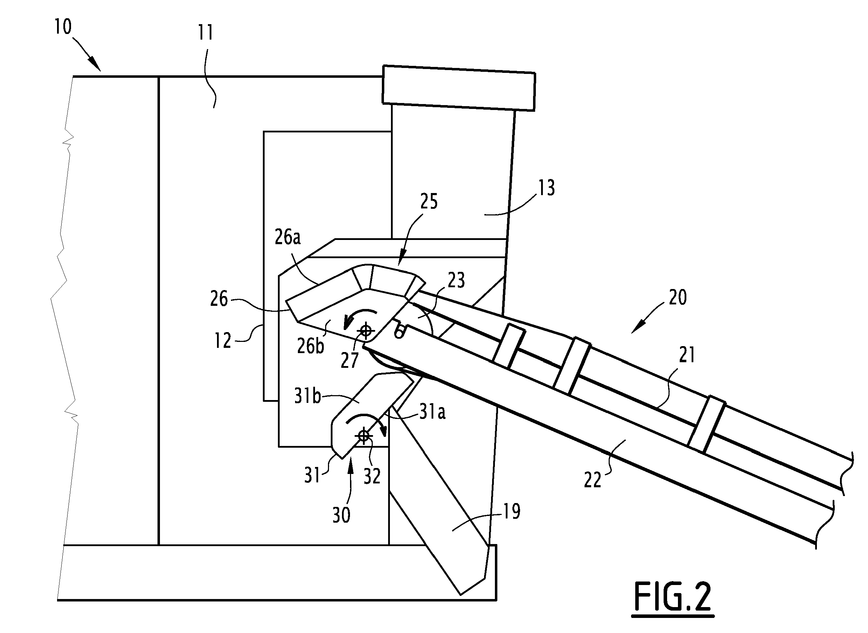

Cette extrémité avant du convoyeur 20 comporte deux déviateurs opposés, respectivement un déviateur supérieur 25 et un déviateur inférieur 30. Le déviateur supérieur 25 est situé au-dessus du plan défini par la bande 21 et le déviateur inférieur 30 est situé au-dessous du châssis 22 du convoyeur 20, ainsi que représenté à la figure 2.

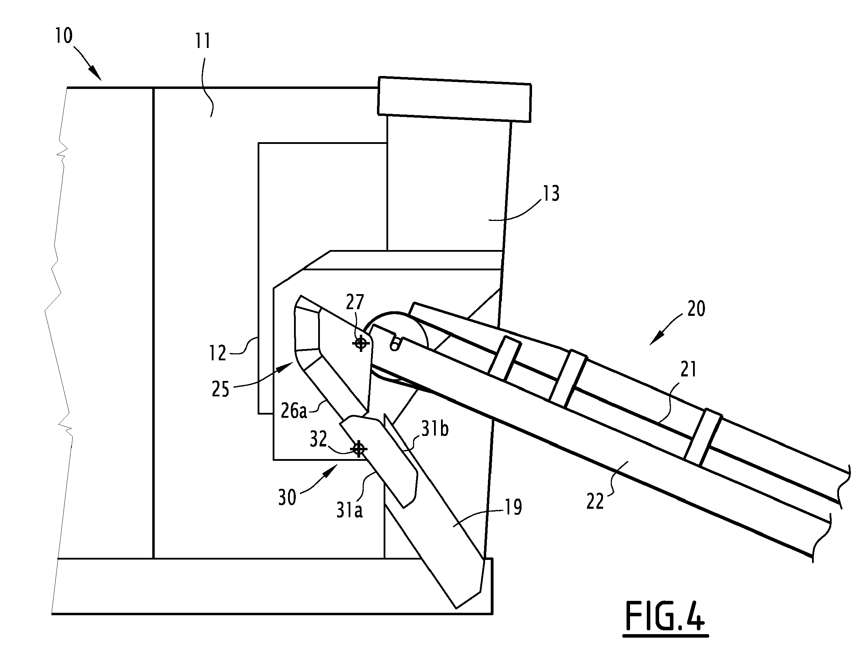

D'une manière générale, les déviateurs, respectivement supérieur 25 et inférieur 30, sont déplaçables par pivotement entre une première position écartée l'un de l'autre (figure 2) libérant l'extrémité du convoyeur 20 pour lancer les matériaux à l'intérieur de l'enveloppe 11 du tambour 10 et une seconde position dans le prolongement l'un de l'autre (figure 4) en regard de l'extrémité de ce convoyeur 20 pour dévier les matériaux dans un tube d'évacuation afin d'éviter que ces matériaux pénètrent dans l'enveloppe 11 pour les évacuer vers un ensemble de récupération, non représenté, en dehors du tambour 10.

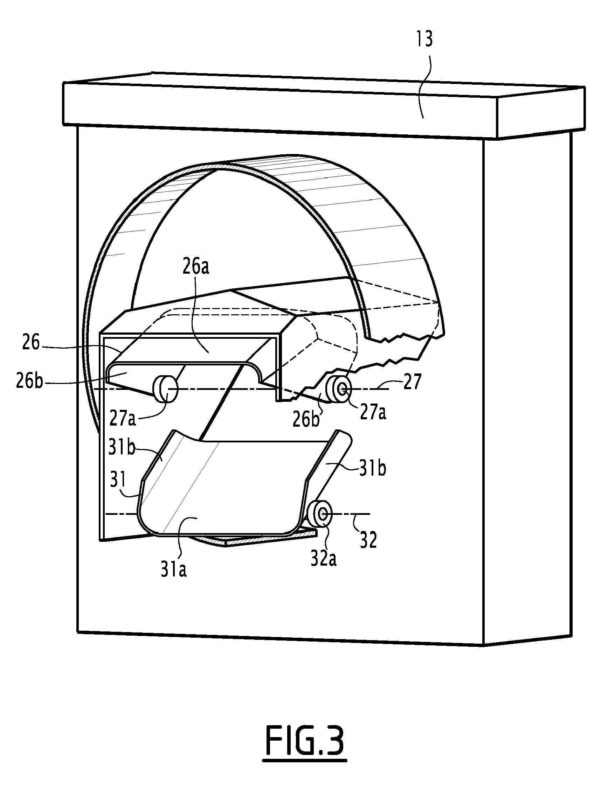

Ainsi que montré plus particulièrement sur les figures 2 et 3, le déflecteur supérieur 25 est formé par une goulotte 26 de section transversale en U, ouverte vers le bas dans la première position de la figure 2. Cette goulotte 26 comprend un fond 26a qui présente longitudinalement une forme sensiblement concave et deux parois latérales 26b opposés et s'étendant sensiblement parallèlement l'une par rapport à l'autre. La goulotte 26 du déviateur supérieur 25 est montée pivotante autour d'un axe sensiblement horizontal 27. Dans l'exemple de réalisation représenté sur les figures, l'axe 27 est formé par deux demi-axes 27a reliés chacun à une paroi latérale 26b de cette goulotte 26.

Le déviateur inférieur 30 est formé par une goulotte 31 de section transversale en U, ouverte vers le haut dans la première position représentée sur les figures 2 et 3. Cette goulotte 31 comporte un fond 31a sensiblement plat et deux parois latérales 26b opposées et sensiblement parallèles l'une par rapport à l'autre. La goulotte 31 du déviateur inférieur 30 est montée pivotante autour d'un axe de pivotement 32 sensiblement horizontal formé de deux demi-axes 32a reliés chacun à une paroi latérale 31 b de cette goulotte 31.

Comme cela apparaît à la figure 2, l'axe de pivotement 27 du déviateur supérieur 25 est situé en avant de l'axe du rouleau de tête 23 par rapport au sens de déplacement de la bande 21 du tapis transporteur et l'axe de pivotement 32 du déviateur inférieur 30 est situé au-dessous de l'axe dudit rouleau de tête 23.

Les axes de pivotement 27 et 32 des déflecteurs, respectivement supérieur 25 et inférieur 30, sont portés par exemple par le châssis 22 du convoyeur 20 ou par la boîte à fumée 13 ou par un châssis indépendant ou par une combinaison de ces différentes solutions.

Le basculement des déflecteurs, respectivement supérieur 25 et inférieur 30, entre la première position d'enfournement des matériaux à l'intérieur de l'enveloppe 11 du tambour 10, représentée à la figure 2 et la seconde position de déviation des matériaux vers le tube d'évacuation 19, représenté à la figure 4, est assuré par tout moyen approprié, de type connu, comme par exemple par des vérins pneumatiques ou hydrauliques ou des leviers mécaniques.

Lors du fonctionnement de la centrale d'enrobage, l'enveloppe 11 du tambour 10 est entraînée en rotation et le brûleur 15 est en fonctionnement. Les granulats froids et humides provenant des trémies de l'unité de stockage sont dosés et pesés par les éléments de dosage à la sortie de ces trémies pour avoir un mélange de granulats déterminé en fonction du produit enrobé bitumineux à obtenir.

Les granulats sont déversés sur le convoyeur 20 qui les transporte jusqu'à l'entrée 12 de l'enveloppe 11 du tambour 10. Les déviateurs, respectivement supérieur 25 et inférieur 30, sont dans la première position, représentés à la figure 2 de façon à libérer l'extrémité avant du convoyeur 20. Les granulats entraînés par la bande 21 de ce convoyeur 20 sont lancés à l'intérieur de l'enveloppe 11. Dans cette enveloppe 11, les granulats sont alors chauffés et séchés par les gaz chauds produits par la flamme du brûleur 15 et ils sont mélangés au bitume liquide ou à des liants hydrocarbonés pour obtenir à la sortie de l'enveloppe 11 le produit enrobé bitumineux.

Lorsque les opérateurs souhaitent effectuer un calibrage des éléments de dosage des trémies de l'unité de stockage, cette opération se réalise par prélèvement de matière. Dans ce cas, les déflecteurs, respectivement supérieur 25 et inférieur 30, sont basculés autour des axes respectifs 27 et 32 pour les amener dans la seconde position représentée à la figure 4. Ces déflecteurs sont, dans cette seconde position, placés dans le prolongement l'un de l'autre en regard de l'extrémité du convoyeur 20 et forment un obstacle à la projection des granulats à l'intérieur de l'enveloppe 11 du tambour 10. Ces granulats à la sortie du convoyeur 20 butent contre les déflecteurs 25 et 30 et sont déviés vers le tube d'évacuation 19 en direction d'un ensemble de récupération en dehors du tambour 10, comme par exemple une benne d'un camion ou un godet d'un chargeur.

Le dispositif selon l'invention permet donc par des moyens simples et compacts, de permettre une introduction normale des matériaux dans l'enveloppe du tambour ou de dévier ces matériaux vers un ensemble de récupération.

Le dispositif selon l'invention permet également grâce au déflecteur inférieur 30 dans la première position représentée à la figure 2, de pouvoir récupérer et d'introduire dans l'enveloppe du tambour les éléments raclés sur la bande du convoyeur par un racleur approprié. Ces éléments raclés tombent par gravité dans le déviateur inférieur et ils sont introduits dans l'enveloppe dudit tambour.

## Revendications

1. Dispositif d'introduction de matériaux dans un tambour rotatif (10) d'une centrale d'enrobage pour la préparation de produits enrobés bitumineux, ledit tambour (10) comportant une enveloppe (11) montée rotatif autour de son axe longitudinal et munie d'une entrée (12) des matériaux au niveau de laquelle débouche un convoyeur élévateur-enfourneur (20) des matériaux (1) à l'intérieur de l'enveloppe (11), **caractérisé en ce que** le convoyeur (20) comporte à son extrémité située au niveau de l'entrée (12) du tambour (10), deux déviateurs (25, 30) opposés, disposés de part et d'autre dudit convoyeur (20) et déplaçables par pivotement entre une première position écartée l'un de l'autre libérant l'extrémité du convoyeur (20) pour lancer les matériaux à l'intérieur de ladite enveloppe (11) et une seconde position dans le prolongement l'un de l'autre en regard de l'extrémité dudit convoyeur (20) pour dévier les matériaux vers un ensemble de récupération (19) en dehors du tambour (10).

2. Dispositif selon la revendication 1, **caractérisé en ce que** les deux déviateurs comprennent un déviateur supérieur (25) formé par une goulotte (26) de section transversale en U, ouverte vers le bas dans la première position et un déviateur inférieur (30) formé par une goulotte (31) de section transversale en U, ouverte vers le haut dans la première position.

3. Dispositif selon la revendication 2, **caractérisé en ce que** le fond (26a) de la goulotte (26) du déviateur supérieur (25) présente longitudinalement une forme sensiblement concave et le fond (31 a) de la goulotte (31) du déviateur inférieur (30) est plat.

4. Dispositif selon l'une quelconque des revendications précédentes, **caractérisé en ce que** chacun des déviateurs (25, 30) est monté pivotant sur un axe sensiblement horizontal (27, 32).

5. Dispositif selon l'une quelconque des revendications précédentes, **caractérisé en ce que** le convoyeur (20) est formé par un tapis transporteur à bande (21) sans fin comportant un rouleau de tête (23) disposé sensiblement au niveau de l'entrée (12) du tambour (10) et **en ce que** l'axe de pivotement (27) du déviateur supérieur (25) est situé en amont de l'axe du rouleau de tête (23) par rapport au sens de déplacement du tapis transporteur et l'axe de pivotement (32) du déviateur inférieur (30) est situé au-dessous de l'axe du rouleau de tête (23).

6. Dispositif selon la revendication 4 ou 5, **caractérisé en ce que** les axes de pivotement (27, 32) des déviateurs, respectivement supérieur (25) et inférieur (30) sont portés par un châssis (22) du convoyeur (20) ou par une boîte à fumée (13) placée au niveau de l'entrée (12) du tambour (10) ou par un châssis indépendant.
